# EUROPEAN PATENT SPECIFICATION

(11) **EP 1 736 845 B1**
(45) Date of publication and mention of the grant of the patent: **14.05.2008**
(21) Application number: 06012401.3
(22) Date of filing: 16.06.2006
(51) Int. Cl.: G05G 5/03, G05G 1/08, G05G 9/047

(54) **Force feedback input device**
Eingabevorrichtung mit Kraftrückkoppelung
Dispositif d'entrée de régénérateur de force

(30) Priority: 21.06.2005 JP 2005180585
(43) Date of publication of application: 27.12.2006
(73) Proprietor: ALPS ELECTRIC CO., LTD., Tokyo 145-8501 (JP)
(72) Inventor: Maeda, Takuya, Ota-ku Tokyo 145-8501 (JP); Tokiwa, Kenichi, Ota-ku Tokyo 145-8501 (JP)
(74) Representative: Klunker . Schmitt-Nilson . Hirsch

(56) References cited:
- US-B1- 6 325 719
- PATENT ABSTRACTS OF JAPAN vol. 2003, no. 12, 5 December 2003 (2003-12-05) & JP 2004 153927 A (ALPS ELECTRIC CO LTD), 27 May 2004 (2004-05-27) & EP 1 416 505 A (ALPS ELECTRIC CO., LTD) 6 May 2004 (2004-05-06)

## Description

### 1. Field of the Invention

The present invention relates to a force feedback input device according to the preamble of claim 1. The device is used for applying a required feedback force to an operating body that is rotated manually for operation by an operator.

### 2. Description of the Related Art

In recent years, a force feedback function-attached force feedback input device, in which the control of various functions of in-vehicle equipment such as air conditioner, audio equipment or the like is integrated into a single operating body, and a resisting or thrusting force is provided according to the rotating amount or direction of the operating body when an operator rotates the operating body in order to select the equipment or control its function, thereby making an operation feeling better so as to improve the operability, has been proposed.

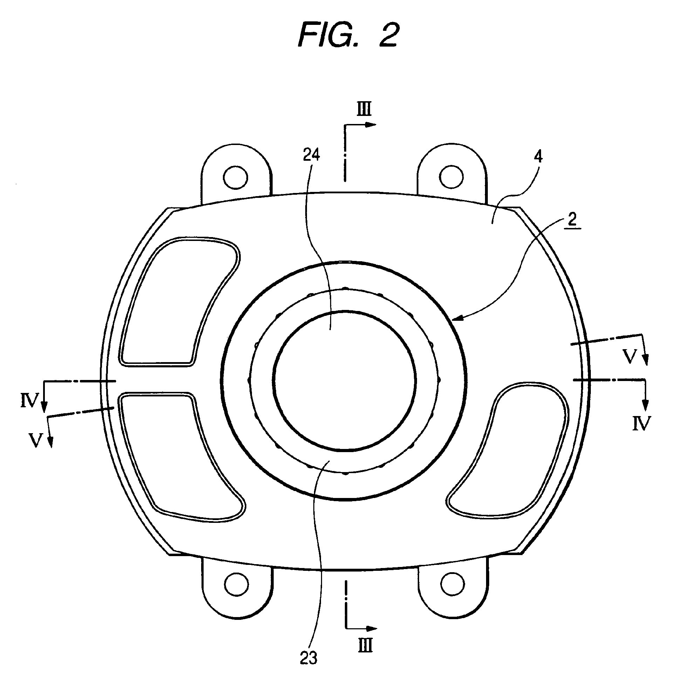

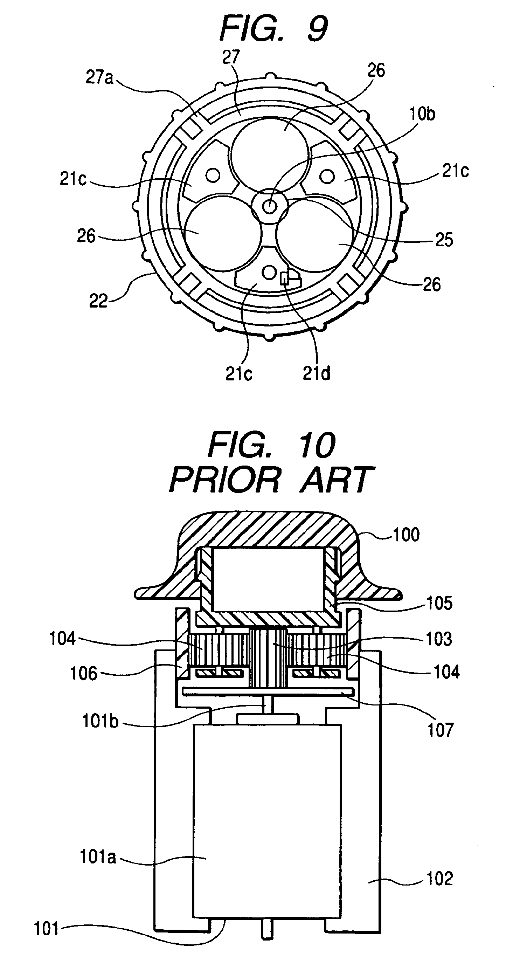

Fig. 10 is a cross-sectional view showing a conventional example of such force feedback input device (for example, see claims 4 and 5 and Fig. 2 in JP-A-2004-153927). The input device includes an operating body 100 manually operated by an operator and a motor 101 providing a required force to the operating body 100. The motor 101 includes a main body 101a and a rotary shaft 101b, and the main body 101a is supported by a motor supporting body 102. A sun gear 103 is attached to the rotary shaft 101b of the motor 101, and three planet gears 104 are engaged with the sun gear 103. The shaft of each planet gear 104 is rotatably supported by a carrier 105, and the operating body 100 is attached to the carrier 105 so as to form a unit. In addition, each planet gear 104 is engaged with the inner circumferential surface of a ring gear 106, and the ring gear 106 is fixed to the motor supporting body 102. The sun gear 103, planet gear 104, carrier 105, and ring gear 106 compose a planetary gear series, and the rotation of the motor 101 is reduced by a decelerating gear mechanism including the planetary gear series and then transferred to the operating body 100. Meanwhile, a code plate 107 integrally formed with the sun gear 103 is attached to the rotary shaft 101b of the motor 101, and although not shown in the accompanying drawings, the rotation of the code plate 107 is detected by a photo interrupter, and a control unit controls the driving of the motor 101 on the basis of the detected signals.

In the force feedback input device constructed as above, since the ring gear 106 of the planetary gear series is fixed to the motor supporting body 102, if the operator rotates the operating body 100 clockwise or counterclockwise, the carrier 105 is rotated with the operating body 100 in the same direction, and the planetary gears 104 revolve on their axes and around the sun gear 103. Then, the sun gear 103 and the code plate 107 are rotated with the rotary shaft 101b in the same direction, and the photo interrupter outputs signals corresponding to the rotating state of the operating body 100. The outputted signals of the photo interrupter are scanned by a control unit, and the control unit controls the driving of the motor 101 on the basis of the outputted signals. For example, when the operator rotates the operating body 100 in one direction, the rotating force of the rotary shaft 101b is transferred to the operating body 100 from the sun gear 103 through the planet gear 104 and the carrier 105 by outputting required control signals to the motor 101 from the control unit, and a feedback force exerting against the rotating direction of the operating body 100 is provided to the operator operating the operating body 100.

In the conventional force feedback input device described above, since the planetary gear series is adopted as a decelerating gear mechanism transferring the rotation of the motor 101 to the operating body 100, and the rotation of the motor 101 is transferred to the operating body 100 from the sun gear 103 through the planet gear 104 and the carrier 105, there are problems in that the operating body 100 rotated for operation must be disposed above the ring gear 106 and the entire body of the input device elongates vertically. In addition, since the plurality of planet gears 104 revolves on their axes and around the sun gear 103, there are another problems in that even when it is hoped to dispose electronic parts such as LED, push switch or the like at the rear surface of the operating body 100, it is impossible to make lead wires connected with the electronic parts pass through the planetary gear series and pulled down, and it is also difficult to provide a lighting or push function.

In accordance with the preamble of claim 1, US-B1-6 325 719 discloses a force feedback input device incorporated into a controller for a game machine. In this force feedback input device, the relay gear is supported in a manner not shown in the documents explicitly.

### SUMMARY OF THE INVENTION

The present invention has been finalized in view of the drawbacks inherent in the conventional force feedback input device, and it is an object of the present invention to provide a preferable force feedback input device even when the vertical length thereof is shortened.

In order to achieve the above objective, according to an aspect of the invention, there is provided a force feedback input device including the features of claim 1.

In the force feedback input device constructed as above, since the rotation of the motor is decelerated and then transferred to the internal gear from the center gear through the relay gears, and thus the rotating force of the internal gear is directly transferred to the cylindrical rotating part so as to rotate the internal gear and the operating body integrally, it is possible to dispose the cylindrical rotating part of the operating body at the outside of the internal gear so as to make short the vertical length of the entire device.

In the above configuration, the gear holder includes upper and lower holders sandwiching the relay gears, and a circuit substrate on which electronic parts are mounted is supported by the upper holder and a lead wire connected with the circuit substrate is disposed to pass through the peripheral space of the relay gears so as to be accessed to the motor. Therefore, various electronic parts can be disposed above the decelerating gear mechanism.

In this case, if the operating body includes a cylindrical operation ring rotatably sandwiched between the upper holder and the lower holder, a pressing body disposed over the circuit substrate is supported by the upper holder so as to elevate, and a push switch operated by pressing the pressing body is mounted on the circuit substrate as an electronic part, it is possible to add the pressing operation of the pressing body to the rotating operation of the operation ring so as to realize a multiple operation.

Furthermore, in the above construction, even though the number of the relay gears is not limited, it is preferable that a plurality of relay gears (particularly three relay gears) are disposed at regular intervals between the center gear and the internal gear since it is possible to transfer power stably.

### BRIEF DESCRIPTION OF THE DRAWINGS

Fig. 1 is a perspective view of a control unit according to an embodiment of the present invention;
Fig. 2 is a plan view of the control unit;
Fig. 3 is a cross sectional view taken along the line III-III in Fig. 2;
Fig. 4 is a cross sectional view taken along the line IV-IV in Fig. 2;
Fig. 5 is a cross sectional view taken along the line V-V in Fig. 2;
Fig. 6 is an exploded perspective view showing an upper portion of a force feedback input device provided at the control unit;
Fig. 7 is an exploded perspective view showing a lower portion of the force feedback input device;
Fig. 8 is a perspective view showing an important portion of the force feedback input device;
Fig. 9 is a plan view showing the important portion of the force feedback input device; and
Fig. 10 is a cross sectional view of a force feedback input device according to a conventional example.

### DESCRIPTION OF THE PREFERRED EMBODIMENT

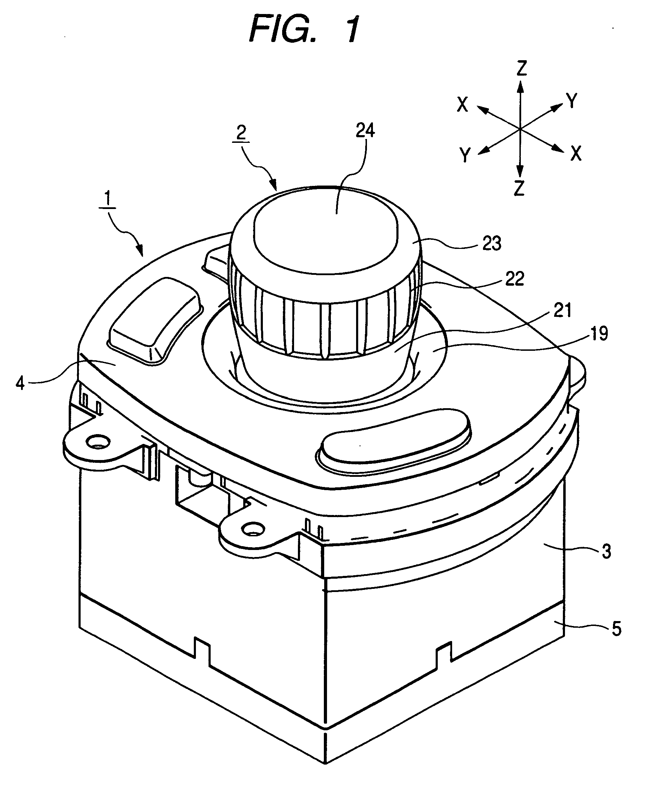

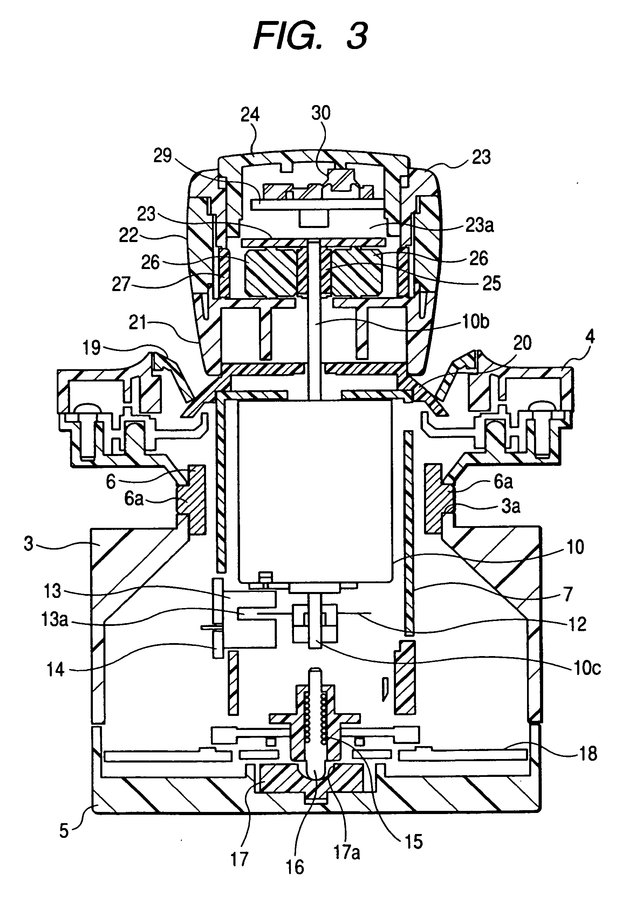

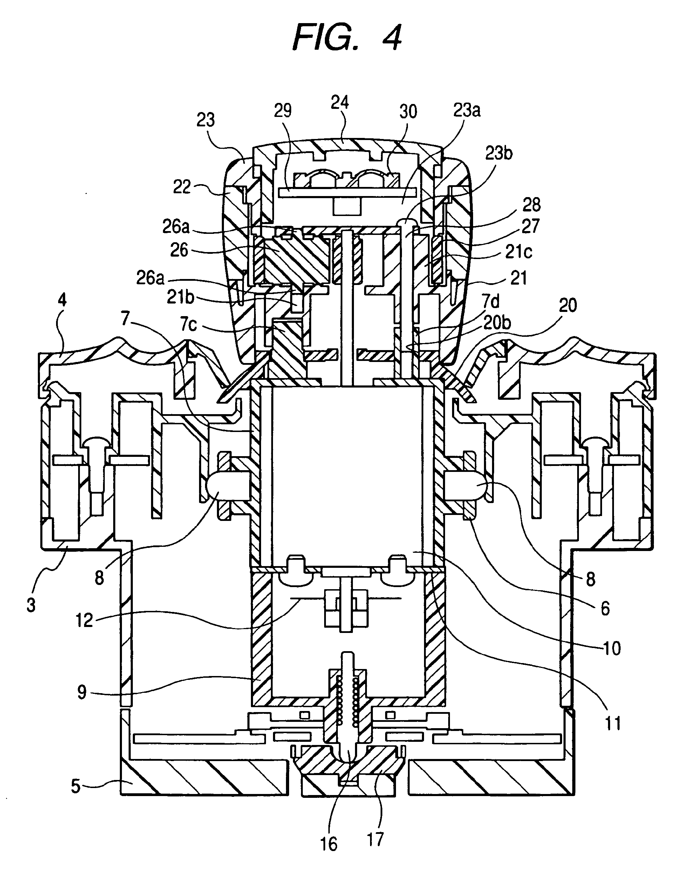

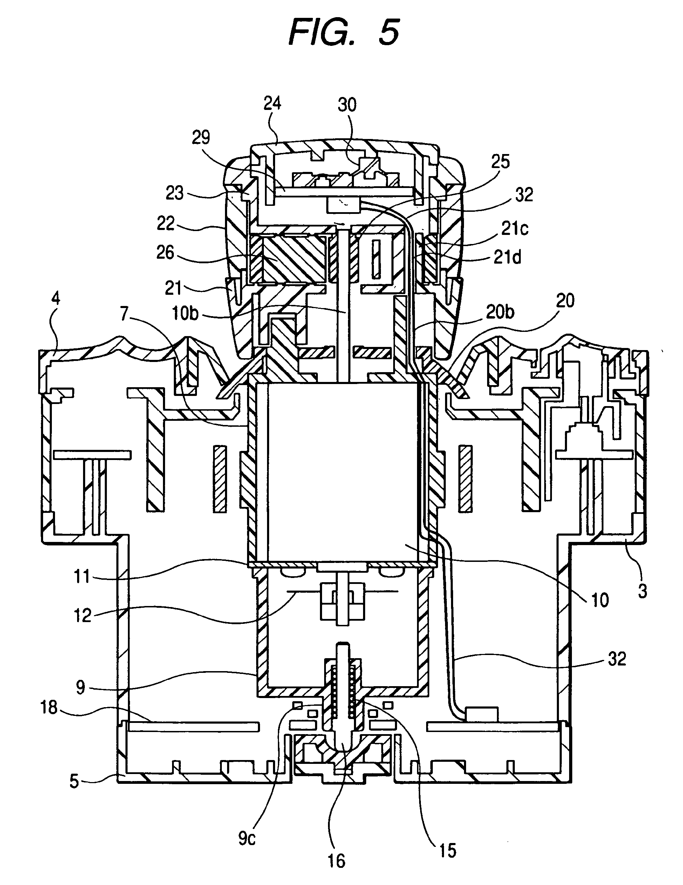

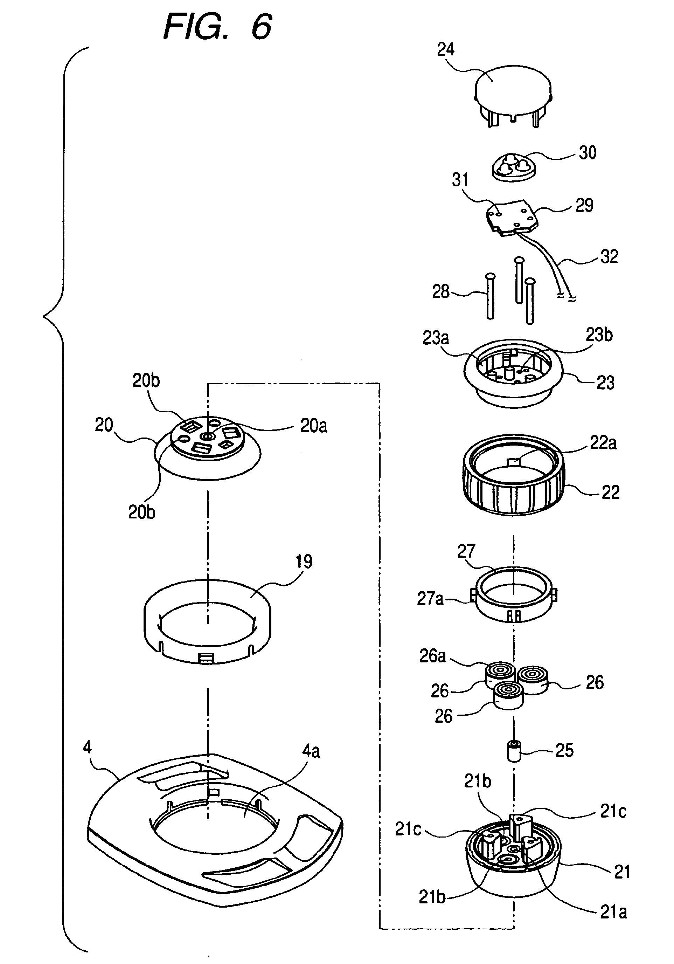

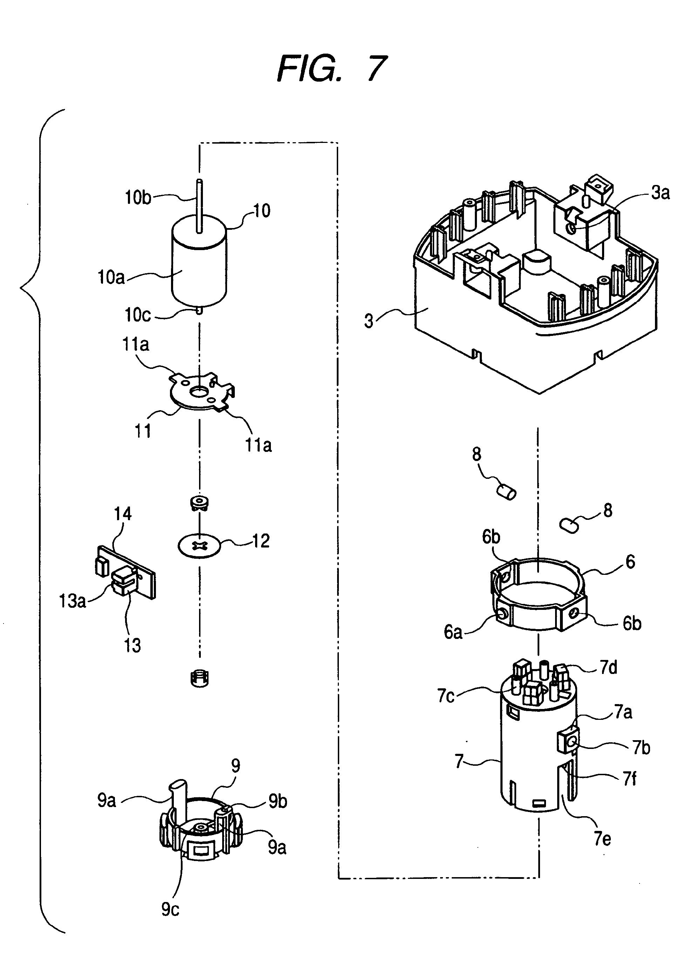

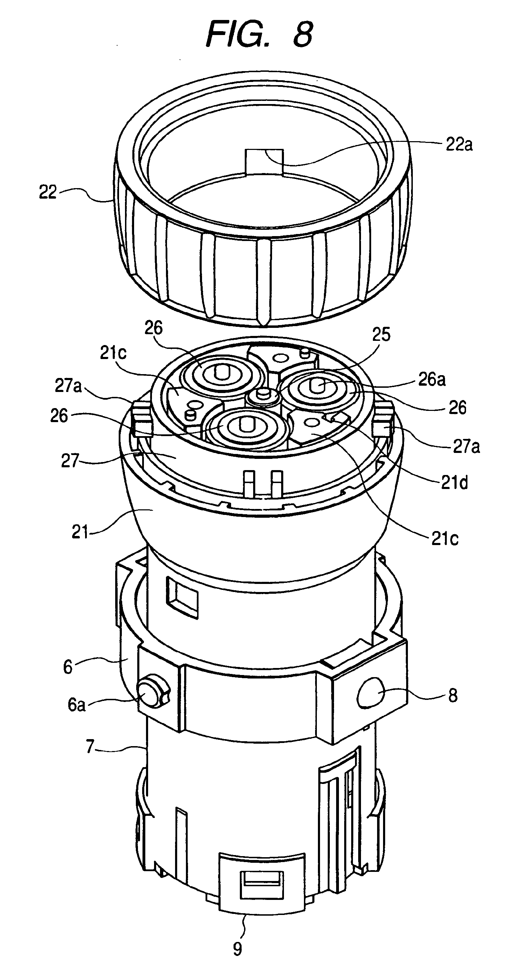

Preferred embodiments of the present invention will now be described with reference to the drawings. Fig. 1 is a perspective view of a control unit according to an embodiment; Fig. 2 is a plan view of the control unit; Fig. 3 is a cross sectional view taken along the line III-III in Fig. 2; Fig. 4 is a cross sectional view taken along the line IV-IV in Fig. 2; Fig. 5 is a cross sectional view taken along the line V-V in Fig. 2; Fig. 6 is an exploded perspective view showing an upper portion of a force feedback input device provided at the control unit; Fig. 7 is an exploded perspective view showing a lower portion of the force feedback input device; Fig. 8 is a perspective view showing an important portion of the force feedback input device; and Fig. 9 is a plan view showing the important portion of the force feedback input device.

The control unit according to the embodiment is a unit that controls in-vehicle electric equipment such as air-conditioner, audio equipment, navigation system or the like integrally by itself. The control unit includes a chassis 1 attached to a center console or the like in a vehicle and an operating knob 2 projecting from the chassis 1. The chassis 1 includes a hollow case 3 open to its top and bottom, an upper cover 4 that seals a top opening end of the case 3, a lower cover 5 that seals a bottom opening end of the case 3, or the like, and all components are made of synthetic resin.

A ring-like ring body 6 is disposed inside the case 3, and a pair of protrusions 6a and a pair of holes 6b are alternately formed on the ring body 6 at 90-degree intervals. The both protrusions 6a are inserted into shaft holes 3a formed on the upper portion of the facing inside wall of the case 3, and the ring body 6 is supported by the case 3 in a manner that the ring body 6 rotates around a straight line passing the both shaft holes 3a as its central axis. A cylindrical motor supporting body 7, the bottom of which is open, is inserted into the ring body 6, and a pair of step-attached protrusions 7a is formed on the outer circumferential surface of the motor supporting body 7. In addition, penetrating holes 7b are formed on the motor supporting body 7 such as would cut the central axis of the motor supporting body 7 and the both step-attached protrusions 7a, and pins 8 are inserted into the penetrating holes 7b and the both holes 6b so as to support the motor supporting body 7 with the ring body 6 in a manner that the motor supporting body 7 rotates around a straight line passing the both holes 6b as its central axis. That is, since the motor supporting body 7 is rockably supported in a direction perpendicular to the case 3 through the ring body 6, and the motor supporting body 7 is one of the components of the operating knob 2, the operating knob 2 is rockable in first and second directions (X-Y direction in Fig. 1) which are perpendicular to each other.

A plurality of supporting columns 7c and protrusions 7d is provided alternately along the circumferential direction on the top surface of the motor supporting body 7, and a pair of cut-off portions 7e is formed at the lower end portion of the motor supporting body 7. The cut-off portions 7e are extended vertically, and a semi-spherical protrusion 7f is formed at the bottom surface of one of the cut-off portions 7e. In addition, the bottom opening of the motor supporting body 7 is sealed with a coupling body 9, and the coupling body 9 is integrated into the lower end of the motor supporting body 7 by using a fixing unit such as snap-coupling or the like. A pair of extended pieces 9a which is to be inserted into the cut-off portion 7e is formed at the coupling body 9, and a semi-spherical protrusion 9b is formed on the top surface of one of the extended pieces 9a.

A motor 10 is accommodated in the motor supporting body 7, and a halting plate 11 is attached to the lower end surface of a main body portion 10a of the motor 10. A pair of jaw parts 11a projects from the halting plate 11, and the jaw parts 11a are engaged with the cut-off portions 7e so as to hold the main body portion 10a of the motor 10 in a state that the main body 10a is fastened into the motor supporting body 7. In this case, the motor 10 can pivot on the both semi-spherical protrusions 7f and 9b to a slight degree by sandwiching one of the jaw parts 11a with the both semi-spherical protrusions 7f and 9b formed on the bottom surface of the cut-off portion 7e and the surface of the extended piece 9a respectively.

The motor 10 has rotating shafts 10b and 10c projecting from the top and bottom surfaces of the main body portion 10a, and the rotating shaft 10b penetrates the top surface of the motor supporting body 7 and extends upward. In addition, a code plate 12 is attached the other rotating shaft 10c, and the code plate 12 rotates within the recessed portion 13a of a photo interrupter 13 (see Fig. 3). Meanwhile, the photo interrupter 13 is mounted on a substrate 14, and the substrate 14 is attached to the circumferential wall of the motor supporting body 7. The code plate 12 and the photo interrupter 13 form a rotation detecting unit that detects the rotation of the motor 10, and a control unit, not shown, controls the driving of the motor 10 on the basis of the detected signals of the photo interrupter 13.

A cylindrical engaging protrusion 9c is formed at the center of the bottom surface of the coupling body 9, and a driving rod 16 is slidably held in the engaging protrusion 9c through a coil spring 15. A supporting body 17 is disposed below the driving rod 16, and the supporting body 17 is fixed to the center of the bottom surface of the lower cover 5. An earthenware mortar-like cam groove 17a is formed on the top surface of the supporting body 17, and the front end (lower end) of the driving rod 16 receives the elastic force of the coil spring 15 so as to be pressed on the inside base surface. As a result, if the operating knob 2 is rocked in the first and second directions (X-Y direction), the lower end of the driving rod 16 slides outward from the center of the inside base surface of the cam groove 17a, and if the operating force is removed, the lower end of the driving rod 16 receives the elastic force of the coil spring 15 so as to return to the center of the inside base surface of the cam groove 17a. As a result, the operating knob 2 returns automatically to its original vertical direction (Z direction in Fig. 1). Meanwhile, a print substrate 18 is fixed to the top of the lower cover 5, and although not shown in the drawings, a detecting element that detects the rocking operation state of the operating knob 2, a circuit element of the above-described control unit, and the like are mounted on the print substrate 18.

As shown in Fig. 6, a round opening 4a is provided at the center of the upper cover 4, and a ring-like makeup ring 19 is engaged with the opening 4a by using a fixing unit such as snap coupling or the like. The components of the operating knob 2, that is, base 20 or lower holder 21, operation ring 22, upper holder 23, pressing body 24 or the like project from the makeup ring 19, and the base 20 is placed on the above-described motor supporting body 7. A center hole 20a and a plurality of penetrating holes 20b are formed in the base 20, and the supporting columns 7c and the protrusions 7d provided on the top surface of the motor supporting body 7 pass through the penetrating holes 20b and project upward from the base 20.

The lower holder 21 is placed on the base 20, and a center hole 21a and three shaft holes 21b are provided in the lower holder 21. In addition, three protrusions 21c located among the shaft holes 21b stand on the lower holder 21. The shaft holes 21b are disposed around the center hole 21a at 120-degree intervals, and an inserting hole 21d penetrating the protrusion 21c vertically is formed in each protrusion 21c (see Figs. 8 and 9). The above-described rotating shaft 10b of the motor 10 passes through the center hole 20a of the base 20 and the center hole 21a of the lower holder 21 and projects upward from the top surface of the motor supporting body 7, and a center gear 25 is attached to the front end of the rotating shaft 10b. Three relay gears 26 are engaged with the center gear 25, and the supporting shaft 26a of each relay gear 26 is rotatably supported by the shaft hole 21b of the lower holder 21. Furthermore, an internal gear 27 having gears at the inner circumferential surface is rotatably placed on the lower holder 21, and each relay gear 26 is engaged with the gears of the internal gear 27. The center gear 25, the relay gears 26, and the internal gear 27 compose a decelerating gear mechanism that decelerates the rotation of the motor 10 and transfers it to the operation ring 22 (a cylindrical rotating part). That is, a plurality of engaging protrusions 27a is formed on the outer circumferential surface of the internal gear 27, and the operation ring 22, an operating body, is rotated integrally with the internal gear 27 at the outer circumference of the internal gear 27 by engaging an engaging recessed portion formed at the inner circumferential surface of the operation ring 22 with each engaging protrusion 27a. Meanwhile, as described above, since the motor 10 is held in a manner that the motor 10 can pivot on the both semi-spherical protrusions 7f and 9b to a slight degree, the central position of the center gear 25 is automatically adjusted with respect to each relay gear 26, and power is transferred smoothly between the center gear 25 and each relay gear 26.

The upper holder 23 is disposed on the lower holder 21, and the rotating shaft 10b of the motor 10 and the supporting shaft 26a of each relay gear 26 are rotatably supported by the upper holder 23 as well. A hollow 23a is formed on the top surface of the upper holder 23, and a plurality of penetrating holes 23b is formed on the inside base surface of the hollow 23a. In addition, since a plurality of halting screws 28 is inserted into the penetrating holes 23b from the above of the hollow 23a, and each halting screw 28 passes through the protruding wall 21c of the lower holder 21 and the penetrating hole 20b of the base 20 and is screwed into the protrusion 7d of the motor supporting body 7, the lower holder 21 and the upper holder 23 are fixed to the top of the motor supporting body 7 through the base 20, and the decelerating gear mechanism (the center gear 25, the relay gears 26, and the internal gear 27) is supported between the lower holder 21 and the upper holder 23 (see Fig. 4). The upper holder 23 and the lower holder 21 compose a gear holder, and the operation ring 22 is rotatably supported between the lower holder 21 and the upper holder 23.

A circuit substrate 29 is disposed in the hollow 23a of the upper holder 23, and a rubber-made stem 30, a component of a push switch, is mounted on the circuit substrate 29. Since the pressing body 24 is disposed in the hollow 23a of the upper holder 23 so as to elevate, and as the bottom surface of the pressing body 24 comes into contact with the stem 30, the pressing body 24 receives an elastic force from the stem 30 so as to be urged upward. In addition, LEDs 31 are mounted on the circuit substrate 29 for lighting, and if the LEDs 31 emit light at night or dark places, the light illuminates display parts (not shown) of the pressing body 24. Furthermore, lead wires 32 are connected to the rear surface of the circuit substrate 29, and as shown in Fig. 5, the lead wires 32 are pulled down to the print substrate 18 from the inside base surface of the upper holder 23 through the penetrating hole 21d of the lower holder 21 and the penetrating hole 20 of the base 20.

Next, the operation of the force feedback input device provided in the control unit constructed as above will be described. Meanwhile, in the force feedback input device according to the embodiment, even though the operating knob 2 can be rocked in the first or second direction (the X-Y direction in Fig. 1) for operation, the rocking operation of the operating knob 2 will not be described, and mainly, the rotating operation of the operation ring 22 and the pressing operation of the pressing body 24 will be described.

As shown in Figs. 1 to 5, the components of the operating knob 2, the base 20 or the lower holder 21, the operation ring 22, the upper holder 23, the pressing body 24 and the like project from the upper cover of the chassis 1, and if an operator rotates the operation ring 22, an operating body, clockwise or counterclockwise for operation, the internal gear 27 is rotated integrally with the operation ring 22. The rotation of the internal gear 27 is transferred to the center gear 25 through the relay gears 26, and the rotating shafts 10b and 10c of the motor 10 are rotated according to the rotation of the center gear 25. However, in this case, since the shaft of the relay gears 26 is rotatably supported by the gear holder (the upper holder 23 and the lower holder 21) fixed to the motor supporting body 7, the relay gears 26 do not revolve around the center gear 25 even though revolving on their axes. In addition, if the rotating shafts 10b and 10c of the motor 10 are rotated, since the code plate 12 attached to the rotating shaft 10c rotates within the recessed portion 13a of the photo interrupter 13, the photo interrupter 13 outputs signals corresponding to the rotating state of the operation ring 22. The output signals of the photo interrupter 13 are scanned by the control unit, not shown, and the control unit can control the driving of the motor 10 on the basis of the outputted signals. For example, if the operator rotates the operation ring 22 clockwise for operation, and the control unit outputs required control signals to the motor 10, the rotating force of the rotating shaft 10b is transferred to the operation ring 22 from the center gear 25 through the relay gears 26 and the internal gear 27, therefore, it is possible to provide a feedback force exerting against the rotating direction of the operating ring 22 to the operator operating the operation ring 22.

Meanwhile, if the operator presses down the pressing body 24 for operation, since the stem 30 mounted on the circuit substrate 29 is pressed down by the bottom surface of the pressing body 24, the stem 30 is bent and the contact point of the push switch is converted ON from OFF. In addition, if the operating force is removed, the pressing body 24 returns to its original position by the restoring force of the stem 30, and also the contact point of the push switch is converted from ON to OFF.

As described above, since the force feedback input device according to the embodiment is constructed as follows: the decelerating gear mechanism transferring the rotation of the motor 10 held by the motor supporting body 7 to the operation ring 22 includes the center gear 25 attached to the rotating shaft 10b of the motor 10; the shaft of the plurality of relay gears 26 is rotatably supported by the gear holder (the upper holder 23 and the lower holder 21) fixed to the motor supporting body 7 so as to be engaged with the center gear 25; and the rotatable internal gear 27 having the gears engaging with the relay gears 26 at the inner circumferential surface, and the cylindrical rotating part of the operation ring 22 is engaged with the outer circumferential surface of the internal gear 27 to make the operation ring 22 and the internal gear 27 rotate integrally, it is possible to make short the vertical length of the entire body of the device by disposing the operation ring 22 outside the internal gear 27.

In addition, since the gear holder includes the upper holder 23 and the lower holder 21, the relay gears 26 of the decelerating gear mechanism are sandwiched between the upper holder 23 and the lower holder 21, and the circuit substrate 29, on which electronic parts such as push switch (stem 30), LEDs 31 or the like are mounted, is supported by the upper holder 23, it is possible to make the lead wires 32 connected with the circuit substrate 29 pass through the peripheral space of the relay gears 26 so as to be pulled down toward the motor 10, specifically, from the inside base surface of the upper holder 23 to the print substrate 18 through the penetrating hole 21d of the lower holder 21, the penetrating hole 20b of the base 20, and the inside of the motor supporting body 7.

Furthermore, since the cylindrical operation ring 22 is rotatably sandwiched between the upper holder 23 and the lower holder 21, the pressing body 24 facing the circuit substrate 29 is supported by the upper holder 23 so as to elevate, and the push switch is operated by the pressing operation of the pressing body 24, it is possible to realize a multiple operation including the pressing operation of the pressing body 24 as well as the rotating operation of the operation ring 22. Still furthermore, since the circuit substrate 29 mounting the LEDs 31 above the decelerating gear mechanism can be disposed, it is possible to make the pressing body 24 carry a lighting function.

Meanwhile, in the above embodiment, even though the operation ring 22 including separate parts is attached to the outer circumferential surface of the internal gear 27 so as to be integrated with each other, it is possible to form the operation ring 22 and the internal gear 27 as a previously integrated single part.

Still furthermore, in the above embodiment, even though the force feedback input device, in which the operating knob 2 having the operation ring 22 is rockable in the chassis 1 for operation, has been described, it is needless to say that the invention can be applied to a force feedback input device having the operating knob 2 fixed to the chassis 1.

Still furthermore, in the above embodiment, even though the force feedback input device of a multiple operation, in which the elevating pressing body 24 is provided at the top surface of the operating knob 2, has been described, it is possible to provide the rotating operation of the operation ring 22 by getting rid of the pressing body 24. For example, if the cylindrical rotating part of a rotating operation body is disposed outside the internal gear by using a cap-like rotating operation body having the top surface instead of the operation ring 22, since the rotating force of the internal gear is directly transferred to the cylindrical rotating part, and the internal gear and the rotating operation body rotate integrally, it is possible, also in this case, to make short the length of the entire body of the device.

In the force feedback input device according to the invention, since the decelerating gear mechanism transferring the rotation of the motor to the cylindrical rotating part of the operating body includes the center gear attached to the rotating shaft of the motor, the shaft of the relay gears rotatably supported by the gear holder fixed to the motor supporting body so as to be engaged with the center gear, and the rotatable internal gear having gears engaged with the relay gears at the inner circumferential surface, and the cylindrical rotating part is constructed in a manner that the cylindrical rotating part rotates with the internal gear integrally at the outer circumferential surface of the internal gear, the rotating force of the internal gear is directly transferred to the cylindrical rotating part so as to rotate the internal gear and the operating body integrally, and consequently, it is possible to dispose the cylindrical rotating part of the operating body at the outside of the internal gear so as to make short the vertical length of the entire device.

## Claims

1. A force feedback input device comprising:
an operating body (22) having a cylindrical rotating part;
a motor (10) held by a motor supporting body (7); and
a decelerating gear mechanism (25, 26, 27) transferring the rotation of the motor (10) to the cylindrical rotating part, wherein
the decelerating gear mechanism (25, 26, 27) includes a center gear (25) attached to a rotating shaft (10b) of the motor (10), a relay gear (26) engaged with the center gear (25), and a rotatable internal gear (27) having cogs engaged with the relay gear (26) at the inner circumferential surface, and the cylindrical rotating part is constructed in a manner that the cylindrical rotating part rotates with the internal gear (27) integrally at the outer circumferential surface of the internal gear (27), **characterized in that** said relay gear (26) is rotatably supported by a gear holder (23, 21) fixed to the motor supporting body (7),
that the gear holder (23, 21) includes a upper holder (23) and a lower holder (21) sandwiching the relay gears (26), and **in that** the force feedback input further comprises a circuit substrate (29) on which electronic parts are mounted is supported by the upper holder (23) and a lead wire (32) connected with the circuit substrate (29) is disposed to pass through the peripheral space of the relay gears (26) so as to be accessed to the motor (10).

2. The force feedback input device according to claim 1,
**characterized in that** the operating body (22) includes a cylindrical operation ring (22) rotatably sandwiched between the upper holder (23) and the lower holder (21); a pressing body (24) disposed over the circuit substrate (29) is supported by the upper holder (23) so as to elevate; and a push switch (30) operated by pressing the pressing body (24) is mounted on the circuit substrate (29) as an electronic part.

3. The force feedback input device according to claim 1 or 2,
**characterized in that** a plurality of relay gears (26) are provided at regular intervals between the center gear (25) and the internal gear (27).

## Patentansprüche

1. Eingabevorrichtung mit Kraftrückkopplung, aufweisend:
einen Betätigungskörper (22) mit einem zylindrischen Drehteil;
einen Motor (10), der durch einen Motorhalterungskörper (7) gehalten ist; und
einen Untersetzungs-Rädermechanismus (25, 26, 27), der die Rotation des Motors (10) auf den zylindrischen Drehteil überträgt,
wobei der Untersetzungs-Rädermechanismus (25, 26, 27) ein auf einer Drehwelle (10b) des Motors (10) angebrachtes zentrales Zahnrad (25), ein mit dem zentralen Zahnrad (25) kämmendes Relais-Zahnrad (26) sowie ein drehbares innenverzahntes Zahnrad (27) aufweist, das mit dem Relais-Zahnrad (26) kämmende Zähne an seiner Innenumfangsfläche aufweist, und wobei der zylindrische Drehteil derart ausgebildet ist, dass sich der zylindrische Drehteil an der Außenumfangsfläche des innenverzahnten Zahnrads (27) in integraler Weise zusammen mit den innenverzahnten Zahnrad (27) dreht,
**dadurch gekennzeichnet, dass** das Relaiszahnrad (26) durch einen an dem Motorhalterungskörper (7) befestigten Zahnradhalter (23, 21) drehbar gehaltert ist, dass der Zahnradhalter (31, 21) einen oberen Halter (23) und einen unteren Halter (21) aufweist, die die Relais-Zahnräder (26) sandwichartig zwischen sich schließen, und dass die Eingabevorrichtung mit Kraftrückkopplung ferner ein Schaltungssubstrat (29) aufweist, an dem elektronische Teile angebracht sind und das durch den oberen Halter (23) gehaltert ist, und dass ein mit dem Schaltungssubstrat (29) verbundener Leitungsdraht (32) derart angeordnet ist, dass er durch den peripheren Raum der Relais-Zahnräder (26) hindurch geführt ist und **dadurch** Zugang zum Motor (10) hat.

2. Eingabevorrichtung mit Kraftrückkopplung nach Anspruch 1,
**dadurch gekennzeichnet, dass** der Betätigungskörper (22) einen zylindrischen Betätigungsring (22) aufweist, der sandwichartig zwischen dem oberen Halter (23) und dem unteren Halter (21) drehbar angeordnet ist; dass ein über dem Schaltungssubstrat (29) angeordneter Druckbeaufschlagungskörper (24) durch den oberen Halter (23) derart gehaltert ist, dass er sich hubbewegungsartig bewegen kann; und dass ein durch Druckbeaufschlagung des Druckbeaufschlagungskörpers (24) betätigbarer Drückschalter (30) in Form eines elektronischen Teils auf dem Schaltungssubstrat (29) angebracht ist.

3. Eingabevorrichtung mit Kraftrückkopplung nach Anspruch 1 oder 2,
**dadurch gekennzeichnet, dass** eine Mehrzahl von Relais-Zahnrädern (26) in regelmäßigen Intervallen zwischen dem zentralen Zahnrad (25) und dem innenverzahnten Zahnrad (27) vorgesehen ist.

## Revendications

1. Dispositif d'entrée de rétroaction de force, comprenant :
un corps opérationnel (22) comportant une partie rotative cylindrique ;
un moteur (10) maintenu par un corps de support de moteur (7) ; et
un mécanisme d'engrenages de décélération (25, 26, 27) transférant la rotation du moteur (10) à la partie rotative cylindrique, dans lequel :
le mécanisme d'engrenages de décélération (25, 26, 27) comprend un engrenage central (25) fixé à un arbre rotatif (10b) du moteur (10), un engrenage de relais (26) s'engrenant avec l'engrenage central (25), et un engrenage interne rotatif (27) comportant des dents s'engrenant avec l'engrenage de relais (26) sur la surface circonférentielle intérieure, et la partie rotative cylindrique est construite de telle sorte que la partie rotative cylindrique tourne avec l'engrenage interne (27) d'un seul tenant à la surface circonférentielle extérieure de l'engrenage interne (27),
**caractérisé en ce que** ledit engrenage de relais (26) est supporté en rotation par un support d'engrenages (23, 21) fixé au corps de support de moteur (7), **en ce que** le support d'engrenages (23, 21) comprend un support supérieur (23) et un support inférieur (21) prenant en sandwich l'engrenage de relais (26), et **en ce que** l'entrée de rétroaction de force comprend de plus un substrat de circuit (29) sur lequel sont montées des parties électroniques et qui est supporté par le support supérieur (23) et un fil conducteur (32) connecté au substrat de circuit (29) et disposé de façon à traverser l'espace périphérique de l'engrenage de relais (26) de façon à accéder au moteur (10).

2. Dispositif d'entrée de rétroaction de force selon la revendication 1,
**caractérisé en**tre que le corps opérationnel (22) comprend une bague opérationnelle cylindrique (22) prise en sandwich de façon à pouvoir tourner entre le support supérieur (23) et le support inférieur (21) ; un corps de pression (24) disposé sur le substrat de circuit (29) est supporté par le support supérieur (23) de façon à s'élever ; et un commutateur à bouton-poussoir (30) actionné par pression du corps de pression (24) est monté sur le substrat de circuit (29) sous la forme d'une partie électronique.

3. Dispositif d'entrée de rétroaction de force selon la revendication 1 ou 2,
**caractérisé en ce qu'**une pluralité d'engrenages de relais (26) sont disposés à intervalles réguliers entre l'engrenage central (25) et l'engrenage interne (27).
